# EUROPEAN PATENT SPECIFICATION

(11) **EP 4 170 810 B1**
(45) Date of publication and mention of the grant of the patent: **12.02.2025**
(21) Application number: 22200336.0
(22) Date of filing: 07.10.2022
(51) Int. Cl.: H01M 50/503, H01M 50/505, H01M 50/507, H01M 50/516, H01M 50/521, H01M 50/548, H01M 50/583, H01M 50/522, H01M 50/559, H01M 50/213, H01M 50/264

(54) **ELECTRICAL CONNECTION MEANS FOR CONNECTING TERMINALS OF BATTERY UNITS IN BATTERY PACK**
ELEKTRISCHE VERBINDUNGSMITTEL ZUM VERBINDEN VON KLEMMEN VON BATTERIEEINHEITEN IN EINEM BATTERIEPACK
MOYENS DE CONNEXION ÉLECTRIQUE POUR CONNECTER DES BORNES D'UNITÉS DE BATTERIE DANS UN BLOC-BATTERIE

(30) Priority: 25.10.2021 CN 202111240246
(43) Date of publication of application: 26.04.2023
(73) Proprietor: Techtronic Cordless GP, Anderson, SC 29621 (US)
(72) Inventor: LEE, Hei Man, Kwai Chung (HK); WANG, Lifeng, Kwai Chung (HK); WANG, Nan, Kwai Chung (HK); YU, Shengfu, Kwai Chung (HK); CHEN, Weipeng, Kwai Chung (HK); CHEN, Zexin, Kwai Chung (HK)
(74) Representative: Novagraaf Group

(56) References cited:
- EP-A1- 3 989 354
- WO-A1-2017/129146
- WO-A1-2021/071113

## Description

### Technical field

The present invention relates to an electrical connection means for connecting terminals of battery units in a battery pack.

### Background art

Electrical connection means for connecting terminals of battery units in a battery pack are already known. The electrical connection means is generally welded by spot welding to the terminals of the battery units. When currents generated in the spot welding process pass through the various parts of the electrical connection means, there might be a chance of blackening or even melt-through at a part or position of the electrical connection means or at the periphery thereof. Some electrical connection means are provided with a fuse or fusible part for cutting off excessively high currents. Because the fuse or fusible part has a very small cross section, it is quite common for blackening or even melt-through to occur when the fuse or fusible part is undergoing the spot welding process.

WO2021071113A1 discloses a battery module comprising a plurality of cylindrical battery cells and a busbar plate. The basbar plate comprising a portion that protrudes and extends from an inner edge of a connection opening and makes contact with a cathode terminal or an anode terminal of a battery module and thereby electrical connects the plurality of the cylindrical battery cells. Furthrmore, WO2017129146A1 discloses a parallelly connected grid that comprises several battery cell connection pads disposed on the same plane. Several connection pieces are also connected in between the battery connection cells at intervals. Each connection piece is provided with a fuse protection structure that melts under high temperature. This fuse protection features serves as a safety feature.

### Summary of the invention

The present invention is intended to eliminate or at least reduce local blackening or even melt-through caused by the high temperatures that occur when an electrical connection means is welded. The electrical connection means comprises a body made of an electrically conductive material. Each body at least has a first body part and a second body part, and at least one terminal connection part provided by the first body part or the second body part, for connecting to the terminal of the battery unit. The terminal connection part comprises at least one connection component, each connection component comprising a contact part for contacting the terminal of the battery unit. The terminal connection part further comprises at least one stem connecting the contact part to the first body part or the second body part. Multiple bodies are connected to each other by at least one connection part. Each connection part has at least one fusible part, which has a smaller cross section than the stem 8 and is used as a fuse for cutting off an excessively high current.

According to one embodiment, the at least one terminal connection part comprises a first connection component and a second connection component which are two in number and spaced apart, and which are respectively connected to the body via respective said stems.

According to one embodiment, the at least one connection part is provided with a locally narrow part as the at least one fusible part.

According to one embodiment, an opening is provided in the at least one connection part to form the at least one fusible part.

According to one embodiment, the opening is a through-hole.

According to another embodiment of the present invention, an electrical connection means for connecting terminals of battery units in a battery pack is provided, comprising a body made of an electrically conductive material, the body at least having a first body part and a second body part; and at least one terminal connection part provided by the first body part or the second body part, for connecting to the terminal of the battery unit. The at least one terminal connection part comprises a first connection component and a second connection component which are at least two in number and spaced apart; and each of the connection components comprises a contact part for contacting the terminal of the battery unit, and a stem connecting the contact part to the body. The stem has a smaller cross section than the contact part, and the stem is used as a fuse for cutting off an excessively high current.

According to one embodiment, the contact parts of the first connection component and the second connection component extend in the same direction, or extend in different directions relative to each other.

According to one embodiment, the contact part of the first connection component is connected to the body by the stem via a strip.

According to one embodiment, the strip has an outwardly projecting first end connected to the body, and the strip has a second end as a far end, which is connected to the stem.

According to one embodiment, the strip extends along a partly circular or approximately semicircular path.

According to one embodiment, the contact parts of the first connection component and the second connection component are arranged adjacent (close) to each other.

According to one embodiment, the contact parts of the first connection component and the second connection component have respective straight edges, which extend together in parallel on two opposite sides of the gap.

According to one embodiment, the contact parts of the first connection component and the second connection component have shapes that are substantially mirror images of each other.

According to one embodiment, the contact parts of the first connection component and the second connection component are configured to form a substantially circular or disk-like combined shape.

According to one embodiment, the angle at which the contact parts of the first connection component and the second connection component extend in different directions relative to each other is 90° - 270°.

According to one embodiment, the angle at which the contact parts of the first connection component and the second connection component extend in different directions relative to each other is in the range of 170° - 190°.

According to one embodiment, the angles at which the contact parts of the first connection component and the second connection component extend in different directions relative to each other differ by approximately 180°.

According to one embodiment, the respective positions of the stems of the first connection component and the second connection component are radially opposite each other.

According to one embodiment, the electrical connection means further comprises two said terminal connection parts; the terminal connection part is provided by the corresponding first body part or second body part, and used for connecting to a corresponding terminal of a battery unit adjacent to said battery unit.

According to one embodiment, the electrical connection means further comprises a circuit connection part provided by the first body part or the second body part, for connecting to an operating circuit of the battery pack.

### Brief description of the drawings

The technical solution of the present invention is explained further below based on preferred embodiments, wherein:
Fig. 1 shows a view in which the electrical connection means according to an embodiment of the present invention is used.
Fig. 2 shows a three-dimensional view based on the electrical connection means in Fig. 1.
Fig. 3 shows a partial enlarged drawing of the electrical connection means in Fig. 2.
Figs. 4a - 4c show plans of the electrical connection means according to a second embodiment of the present invention.
Fig. 5 shows an elevation based on the electrical connection means in Fig. 4.
Fig. 6 shows a plan based on the terminal connection part of the electrical connection means in Fig. 4.
Fig. 7 shows a plan of the terminal connection part according to an alternative embodiment.
Fig. 8 shows a view in which the electrical connection means in a third embodiment of the present invention is used.
Fig. 9 shows a three-dimensional view based on the electrical connection means in Fig. 8.
Fig. 10 shows a view in which the electrical connection means in a fourth embodiment of the present invention is used.
Fig. 11 shows a three-dimensional view based on the electrical connection means in Fig. 10; and
Figs. 12a - 12d show possible situations after welding of an ordinary electrical connection means.

### Detailed description of embodiments

Before explaining any embodiment of the present invention in detail, it should be understood that the applications of the present invention are not limited to the structural details and component arrangements expounded in the following description or shown in the drawings. Similarly, it should be understood that the words and terms used herein are intended to describe, and should not be regarded as limiting. General terms, terms relating to extent, such as "substantially" or "about" are to be understood as indicating a suitable range outside a given value, for example a general tolerance associated with the manufacture, assembly and use of the embodiment described. In addition, the use of "comprises", "provided with" or "has" and variants thereof herein is intended to encompass the subsequently listed items.

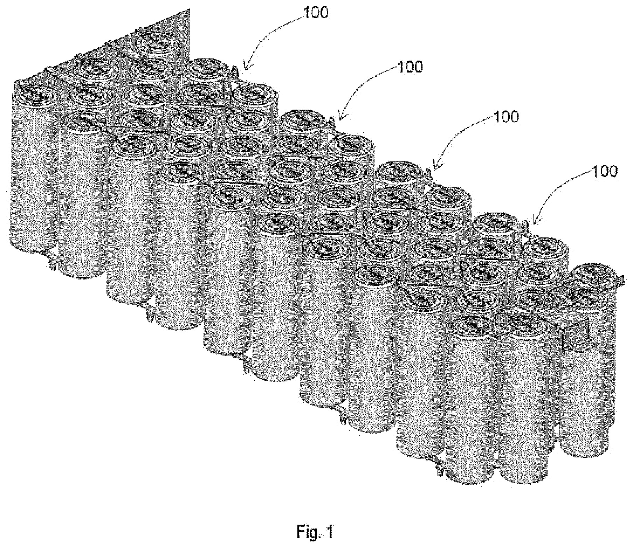

Figs. 1 - 11 all show electrical connection means for connecting terminals of battery units in a battery pack, in multiple embodiments according to the present invention. An electrical connection means 1 is used to connect multiple battery units in a battery pack, connecting ends of the battery units in series and/or in parallel.

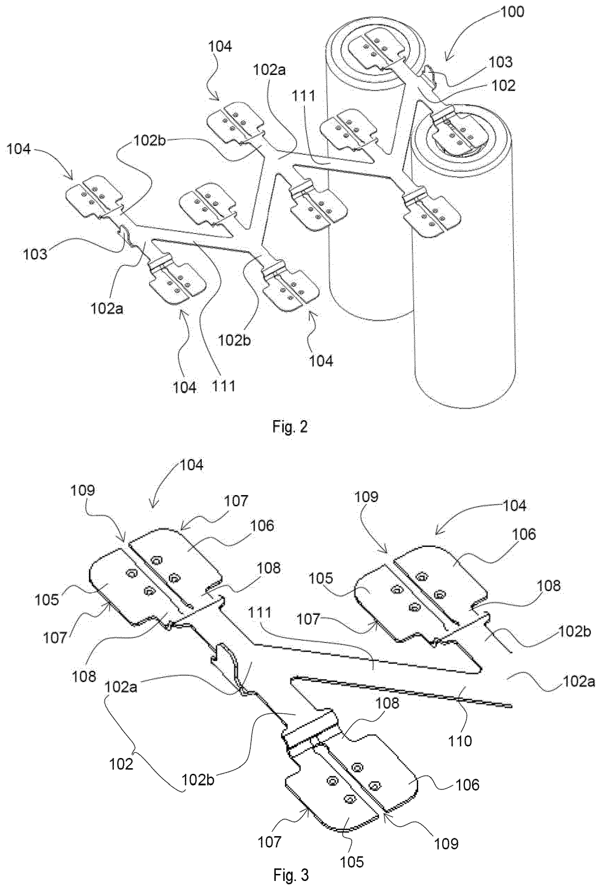

Figs. 1 - 3 show an electrical connection means 100 according to a first embodiment of the present invention, used to connect terminals 10 of multiple battery units. Each electrical connection means 100 can simultaneously connect ten battery units in a specific arrangement. The electrical connection means 100 mainly comprises multiple bodies 102; each body 102 can at least be divided into a first body part 102a and a second body part 102b. The first body part 102a is substantially flat, and is provided with a circuit connection part 103 for connecting to an operating circuit of the battery pack. In general, the circuit connection part 103 may be integrally formed with the first body part 102a of at least one body 102, but may also be connected to the first body part 102a by welding. The circuit connection part 103 is electrically connected by welding to a port (not shown) on a circuit board having the operating circuit. The other part of the body 102 is the second body part 102b, which is connected to the first body part 102. The first body part 102a and second body part 102b are integrally formed. Preferably, the electrical connection means 100 is made of an elastically deformable electrically conductive material. As shown in Fig. 2, the electrical connection means 100 has five bodies 102 arranged in parallel, each body 2 being connected to terminals 10 of two battery units.

As shown in Figs. 2 and 3, the second body part 102b has at least one terminal connection part 104 for connecting to a battery unit terminal 10. Specifically, the second body part 102b has two terminal connection parts 104; the terminal connection part 104 is provided by the corresponding second body part 102b, and used for connecting to the corresponding terminal 10 of a battery unit adjacent to said battery unit. The shape of the terminal connection part 104 may depend on the shape of the terminal 10 of the battery unit. The area of the terminal connection part 104 should be smaller than that of the terminal 10 of the battery unit.

Each terminal connection part 104 has at least one connection component 105. According to this embodiment, each terminal connection part 4 has two connection components, i.e. a first connection component 105 and a second connection component 106. The first connection component 105 and second connection component 106 are arranged individually. The second connection component 106 and the first connection component 105 are located in substantially the same plane, and are configured to adjoin a surface of the terminal 10 of the battery unit or to be biased towards the surface of the terminal 10 of the battery unit. The first connection component 105 and second connection component 106 may be offset towards the terminal of the battery unit in relation to the second body part 102b, in order to weld the terminal connection part 104 to the terminal of the battery unit. The terminal connection part 104 further comprises a stem 108 connecting the contact part 107 to the first body part 102a. The first connection component 105 and second connection component 106 are spaced apart by a certain distance and extend in the same direction. The first connection component 105 and second connection component 106 are respectively connected to the second body part 102b by their respective stems 108. The stem 108 is the only connection path connecting each connection component 105, 106 to the second body part 102b. The stem 108 has a smaller cross section than the contact part 107. As shown in Fig. 3, the stem 108 is narrower than the first and second connection components 105, 106. The stems 108 of the first connection component 105 and second connection component 106 are spaced apart by a certain distance and form a gap 109.

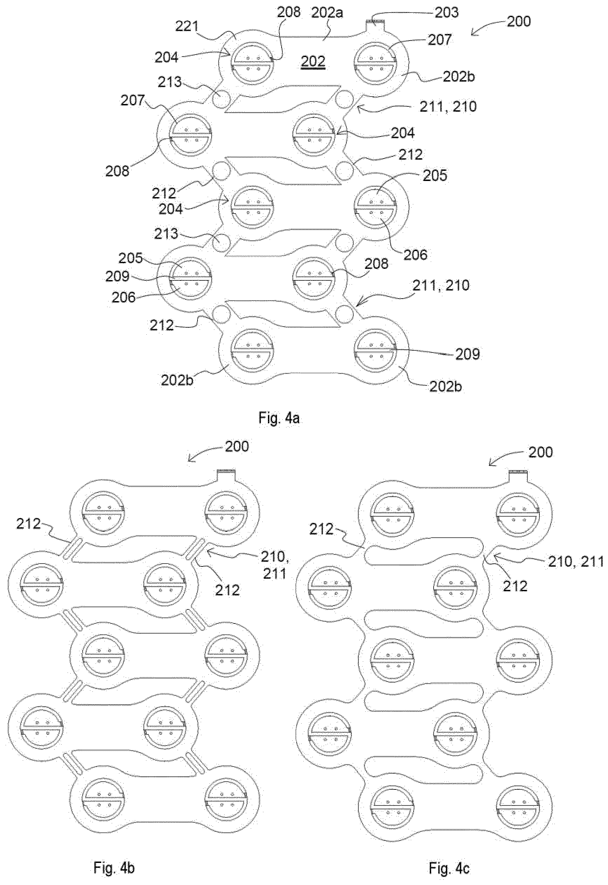

The multiple bodies 102 are connected to each other by at least one connection part 110. As shown in Fig. 2, one body 102 is connected to another body 102 by one connection part 110. Fig. 4 shows another embodiment, in which one body 102 and another body 102 may also be connected by two connection parts 110, so that the overall rigidity of the electrical connection means 100 is increased. Preferably, the connection part 110 is connected to the bodies 102 in an integrally formed manner. Each connection part 110 may be provided with at least one fusible part 111, the fusible part 111 having a smaller cross section than the stem 108 (this difference is not shown in the figures). Alternatively, each of, or one of, the connection parts 110 may also be provided with a locally narrow part (not shown in the figures), this part having a smaller cross section than any part of the body 102, including the stem 108, in order to form a fuse for cutting off an excessively high current. Advantageously, at least one locally narrow part may be formed in the connection part 110 by a hole-opening process step, for use as a fuse for cutting off an excessively high current. In addition, multiple connection parts 110 may extend along substantially Z-shaped paths, and connect multiple bodies 102 in a staggered arrangement, to match the way in which multiple battery units are arranged.

Figs. 4a - 7 show an electrical connection means 200 in a second embodiment of the present invention. Similarly, the electrical connection means 200 comprises multiple bodies 202; each can at least be divided into a first body part 202a and a second body part 202b. Specifically, the electrical connection means 200 has five bodies 202 arranged in parallel, each body 202 being connected to terminals of two battery units. The first body part 202a of each body 202 extends in a plane, and is provided with a circuit connection part 203 for connecting to an operating circuit of the battery pack. The circuit connection part 203 may be integrally formed with the first body part 202a, and the circuit connection part 203 may be electrically connected by welding to a port (not shown in the figures) on a circuit board having the operating circuit. The other part of the body 202 is the second body part 202b, which is electrically connected to the first body part 202. The first body part 202a and second body part 202b are connected in an integrally formed manner. Preferably, the electrical connection means 200 is made of an elastically deformable electrically conductive material.

The second body part 202b of each body 202 is configured to be electrically connected to an end of a battery unit. As shown in Figs. 4a - 4c, the second body part 202b has at least one terminal connection part 204 for connecting to a battery unit terminal. The second body part 202b may have two terminal connection parts 204; the terminal connection part 204 is provided by the corresponding second body part 202b, and used for connecting to the corresponding terminal of a battery unit adjacent to said battery unit. The shape of the connection part 204 substantially corresponds to the shape of the terminal of the battery unit, e.g. circular as shown in the figures. The area of the terminal connection part 204 should be smaller than that of the terminal of the battery unit.

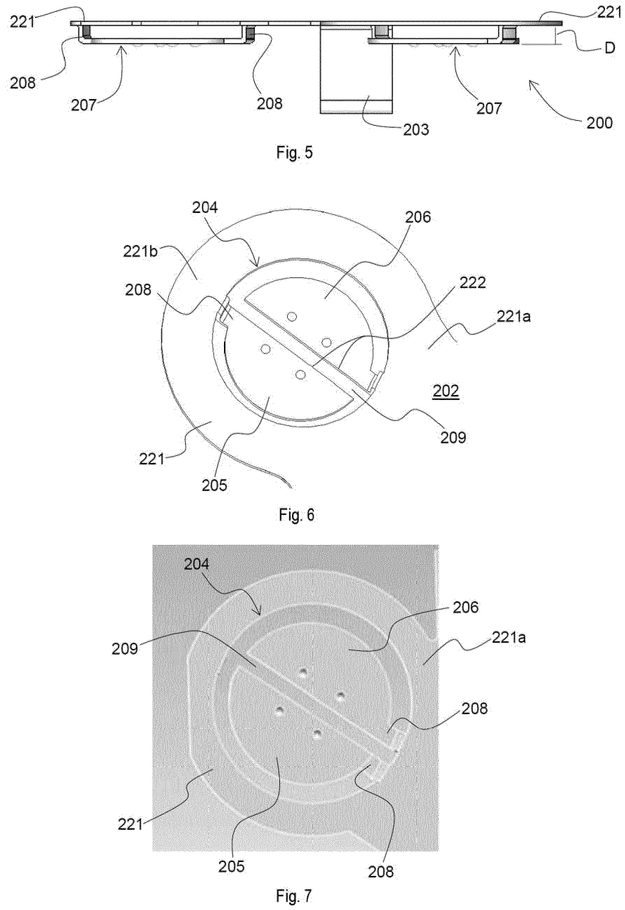

Each terminal connection part 204 has a first connection component 205 and a second connection component 206 which are at least two in number. The first connection component 205 and second connection component 206 are arranged individually. The second connection component 206 is located in substantially the same plane as the first connection component 205. The first connection component 205 and second connection component 206 are in the form of semicircles facing each other, and are configured to adjoin a surface of the terminal of the battery unit, or to be biased towards the surface of the terminal 20 of the battery unit. The first connection component 205 and second connection component 206 may be offset towards the terminal of the battery unit in relation to the second body part 202b, as shown in Fig. 5, in order to connect the terminal connection part 204 to the terminal of the battery unit.

Each connection component 205, 206 comprises a contact part 207 for contacting the terminal 20 of the battery unit, and a stem 208 connecting the contact part 207 to the remainder of the body 202. The stem 208 is the only connection path connecting each connection component 205, 206 to the second body part 202b. Specifically, the stem 208 has a smaller cross section than the contact part 207. According to Fig. 6, the stem 208 is narrower than the first and second connection components 205, 206; for example, the stem 208 is only about 1/5 of the width of the connection component. The contact parts 207 of the first and second connection components 205, 206 extend in different directions relative to each other, such that the respective stems 208 of the first and second connection components 205, 206 are at positions remote from one another on the terminal connection part 204. The angles at which the contact parts 207 of the first connection component 205 and second connection component 206 extend in different directions relative to each other differ by approximately 180°. That is to say, the contact parts 207 of the first connection component 205 and second connection component 206 extend in opposite directions relative to each other. In this way, the stems 208 of the first connection component 205 and second connection component 206 are located at maximally spaced-apart positions. The respective contact parts 207 of the first and second connection components 205, 206 are connected by the stems 208 to the remainder of the body 202 via a strip 221. The strip 221 has an outwardly projecting first end 221a connected to the remainder of the body 202, and the strip 221 has a second end 221b as a far end, which is connected to the stem 208. Alternatively, as shown in Fig. 7, the contact parts 207 of the first connection component 205 and second connection component 206 may extend in the same or substantially the same direction. However, the respective stems 208 of the first and second connection components 205, 206 are spaced apart by at least a certain distance and form a gap 209.

According to Fig. 5, surfaces of the respective contact parts 207 of the first and second connection components 205, 206 may be offset by a distance D, about 2 mm - 3 mm, relative to a surface of the remainder of the body 202, such that a surface of the contact part 207 abuts a surface of the terminal of the battery unit, to facilitate welding. In addition, the strip 221 extends along an approximately circular or approximately semicircular path, and a cross section of the strip 221 is configured to be larger than a cross section of the stem 208. The respective contact parts 207 of the first and second connection components 205, 206 are arranged adjacent to each other, and the contact parts 207 of the first connection component 205 and the second connection component 206 are spaced apart by a narrow gap 209, e.g. 2 - 3 mm.

The contact parts 207 of the first connection component 205 and second connection component 206 are in the form of semicircles facing each other, and have respective straight edges 222; the two straight edges 222 define the abovementioned gap 209, and extend together in parallel on two opposite sides of the gap 209. The gap 209 causes the contact part 207 of the first connection component 205 to be substantially independent of the contact part 207 of the second connection component 206, and the contact parts 207 of the first connection component 205 and second connection component 206 have shapes that are substantially mirror images or reversed mirror images of each other. Alternatively, the angle at which the contact parts 207 of the first connection component 205 and the second connection component 206 extend in different directions relative to each other may be 90° - 270°, i.e. at least 90° clockwise or anticlockwise. Alternatively, the angle at which the contact parts 207 of the first connection component 205 and the second connection component 206 extend in different directions relative to each other may also be reduced to the range of 170° - 190°. Advantageously, the positions of the respective stems 208 of the first connection component 205 and the second connection component 206 are radially opposite each other, as shown in Fig. 6.

The contact parts 207 of the first connection component 205 and the second connection component 206 may be configured to have a substantially circular or disk-like combined shape. Essentially, if it is desired to form the abovementioned shape, a process step of forming a through-hole 225 of a specific shape in the second body part 202b will generally be required. Alternatively, the contact parts 207 of the first connection component 205 and the second connection component 206 may be connected to the second body part 202a or remainder via the stems 208 directly, thus avoiding the process step of forming the through-hole 225 and saving the material forming the strip 221.

Similarly to the previous embodiment, multiple bodies 202 are connected to each other by at least one connection part 210. Specifically, as shown in Fig. 4, one body 202 is connected to another body 202 of the electrical connection means 200 by two connection parts 210. Preferably, the connection parts 210 are integrally formed with the bodies 202. Each connection part 210 is provided with at least one fusible part 211, the fusible part 211 having a smaller cross section than the stem 208. Each of, or one of, the connection parts 210 may be provided with a locally narrow part 212. Similarly, the locally narrow part 212 has a smaller cross section than any part of the body 202, including the stem 208, in order to form a fuse for cutting off an excessively high current. Advantageously, a circular through-hole 213 may be provided in the connection part 210 as shown in Fig. 4a, or an elongated through-hole 213 may be provided in the connection part 210 as shown in Fig. 4b, to form at least two locally narrow parts 212, for use as a fuse for cutting off an excessively high current. Fig. 4c shows that each connection part 210 may be configured as a single narrow part, which similarly can be used as a fuse for cutting off an excessively high current. In addition, multiple connection parts 210 may extend along substantially Z-shaped paths, and connect multiple bodies 202 in a staggered arrangement, to match the way in which multiple battery units are arranged.

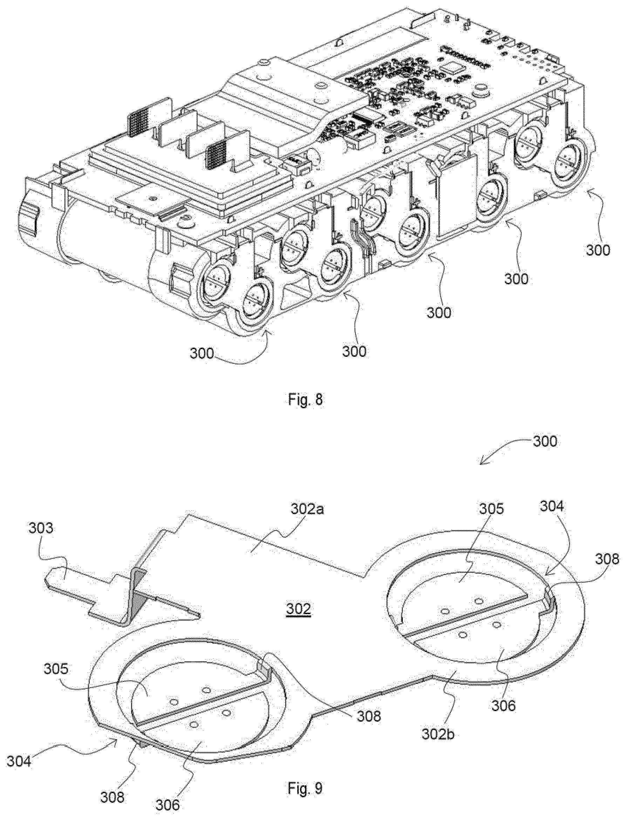

Figs. 8 and 9 show an electrical connection means 300 based on a second embodiment. Essentially, each electrical connection means 300 simultaneously connects two battery units in a specific arrangement. This embodiment is different in that the electrical connection means 1 has a single body 302. Similarly, the body 302 can at least be divided into a first body part 302a and a second body part 302b. The first body part 302a is substantially flat, and the body 302 is provided with a circuit connection part 303 for connecting to an operating circuit of the battery pack. The circuit connection part 303 may be integrally formed with the first body part 302a of the body 302, but may also be connected to the first body part 302a by welding. The circuit connection part 303 is electrically connected by welding to a port (not shown in the figures) on a circuit board having the operating circuit. The other part of the body 302 is the second body part 302b, which is electrically connected to the first body part 302. The first body part 302a and second body part 302b are integrally formed. The electrical connection means 300 is made of an elastically deformable electrically conductive material. The electrical connection means 300 has only one body 302, the body 302 being connected to terminals of two battery units.

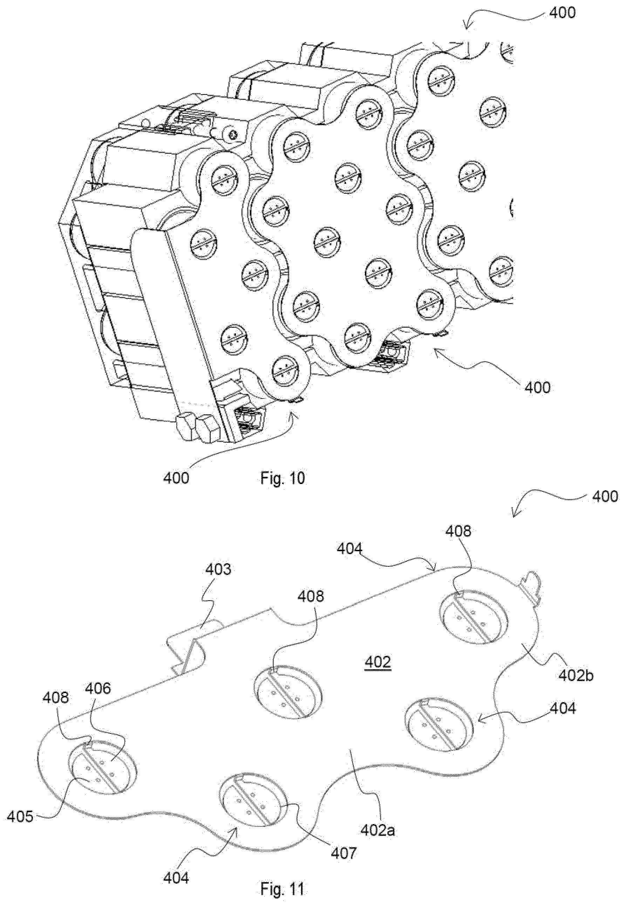

Figs. 10 and 11 show another electrical connection means 400; a body 402 thereof is simultaneously connected to terminals of as many as ten battery units. The entire battery pack may have multiple electrical connection means 400, and there may be no connection between one body 402 and another body 402, so there is no connection part.

Essentially, the electrical connection means 300, 400 described above each comprise the body 302, 402 made of an electrically conductive material, the body having a first body part 302a, 402a and a second body part 302b, 402b, and the first body part 302a, 402a being provided with a circuit connection part 303, 403 for connecting to the operating circuit of the battery pack. The electrical connection means 300, 400 also have at least one terminal connection part 304, 404 provided by the second body part 302b, 402b, for connecting to the terminal of the battery unit. The terminal connection part 304, 404 has a first connection component 305, 405 and a second connection component 306, 406 which are spaced apart and at least two in number.

Each of the connection components comprises a contact part 307, 407 for contacting the terminal of the battery unit, and the terminal connection part 304, 404 also has a stem 308, 408 connecting the contact part 307, 407 to the first body part 302a, 402a, each stem 308, 408 having a smaller cross section than the contact part 307, 407 thereof or any other part, so that the stem 308, 408 is used as a fuse for cutting off an excessively high current. The remaining features of the first connection components 305, 405, the second connection components 306, 406, the contact parts 307, 407 and the stems 308, 408 have already been described in detail in the relevant paragraphs of the second embodiment, so are not described again here.

According to the process step of assembling the battery pack to which the present invention relates, when the electrical connection means is connected to a battery unit, spot welding will generally be used to weld the first connection component 305, 405 and the second connection component 306, 406 to an end of the battery unit. Preferably, to facilitate the electric welding process, welding depressions are provided at specific positions on the surfaces of the first connection component 305, 405 and the second connection component 306, 406, e.g. at positions close to the middle, in order to guide a welding tool to the specific positions to perform spot welding.

In the process of spot welding, the welding current first flows from the welding head through the respective contact parts 307, 407 of the first connection component 305, 405 and second connection component 306, 406, and then flows through the stems 308, 408 towards the second body part 302, 402. The stems 308, 408 are the only paths leading to the second body part 302, 402, and the stems 308, 408 have a smaller cross section than the contact parts 307, 407; consequently, when the current passes through the stems 308, 408, a higher temperature will be generated than at other positions.

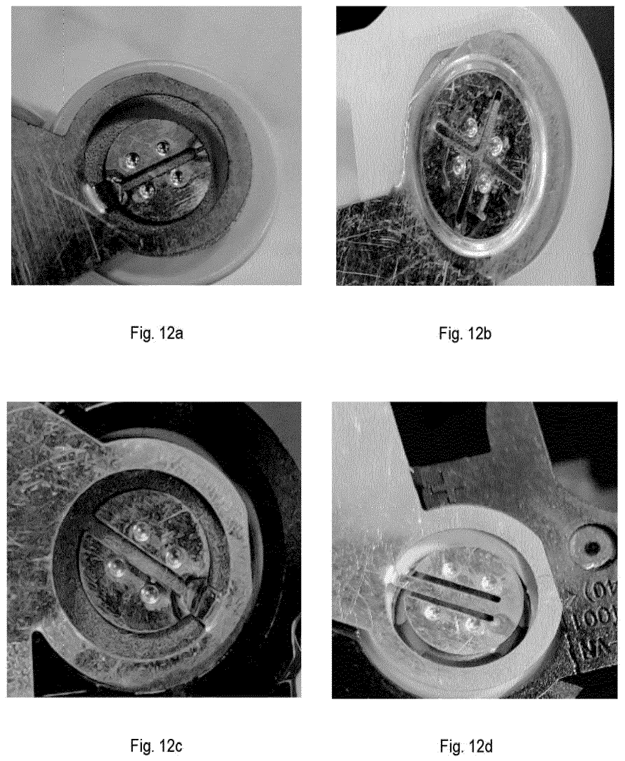

As shown in Figs. 12a - 12d, generally, when an existing electrical connection means is welded by spot welding to a terminal of a battery unit, the high-voltage current generates a high temperature when passing through a position equivalent to a stem, or might cause blackening or even melt-through at the stem or the periphery thereof. In the electrical connection means 300, 400 described above, the positions of the stems 308, 408 are configured to be remote from one another, and the two connection components can effectively disperse current and thermal energy, thus avoiding passage of current through the same position; this can reduce situations in which current flow is overly concentrated at the same position, thereby mitigating the problem of blackening or even melt-through at the stem or the periphery thereof.

As stated above, the electrical connection means provided in the present invention for connecting terminals of battery units in a battery pack provides an improvement compared with an existing electrical connection apparatus, reducing the chance that a high temperature will arise when current passes through a particular position, especially a position used as a fuse, during welding, thus effectively reducing blackening or even melt-through at the stem (i.e. the part used as a fuse) or the periphery thereof.

## Claims

1. Electrical connection means (100) for connecting terminals of battery units in a battery pack, comprising:
multiple bodies (102) made of an electrically conductive material, each of the bodies at least having a first body part (102a) and a second body part (102b);
at least one terminal connection part (104) provided by the first body part (102a) or the second body part (102b), for connecting to the terminal of the battery unit;
**characterized in that** the at least one terminal connection part (104) comprises at least one connection component (105, 106),
each said connection component (105) comprises a contact part for contacting the terminal of the battery unit, the at least one terminal connection part (104) further comprises at least one stem (108) connecting the contact part to the first body part (102a) or the second body part (102b), wherein the stem (108) has a smaller cross section than the contact part, the multiple bodies (102) are connected to each other by at least one connection part (110), each said connection part (110) has at least one fusible part (211), the at least one fusible part (211) has a smaller cross section than the at least one stem (108), and the at least one fusible part (211) is used as a fuse for cutting off an excessively high current.

2. Electrical connection means according to Claim 1, **characterized in that** the at least one terminal connection part (104) comprises a first connection component (105) and a second connection component (106) which are two in number and spaced apart, and which are respectively connected to the body via respective said stems (108).

3. Electrical connection means according to Claim 1, **characterized in that** the at least one connection part (110) is provided with a locally narrow part as the at least one fusible part (111).

4. Electrical connection means according to Claim 1, **characterized in that** an opening is provided in the at least one connection part (110) to form the at least one fusible part (111), the opening preferably being a through-hole.

5. Electrical connection means according to Claim 1, **characterized in that** the connection part (110) extends along a substantially Z-shaped path, and connects the multiple bodies (102) in a staggered arrangement.

6. Electrical connection (100) means for connecting terminals of battery units in a battery pack, comprising:
a body made of an electrically conductive material, the body at least having a first body part (102a) and a second body part (102b);
at least one terminal connection part (104) provided by the first body part (102a) or the second body part (102b), for connecting to the terminal of the battery unit;
**characterized in that** the at least one terminal connection part (104) comprises a first connection component (105) and a second connection component (106) which are at least two in number and spaced apart; and
each of the connection components comprises a contact part for contacting the terminal of the battery unit, and a stem (108) connecting the contact part to the body, the stem (108) having a smaller cross section than the contact part, and the stem (108) being used as a fuse for cutting off an excessively high current.

7. Electrical connection means according to Claim 6, **characterized in that** the contact parts of the first connection component (105) and the second connection component (106) extend in the same direction, or extend in different directions relative to each other.

8. Electrical connection means according to any one of Claims 2 - 6, **characterized in that** the contact part of the first connection component (105) is connected to the body by the stem (108) via a strip (221);
preferably, the strip (221) has an outwardly projecting first end (221a) connected to the body, and the strip (221) has a second end (221b) as a far end, which is connected to the stem (108);
more preferably, the strip (221) extends along a substantially circular or approximately semi-circular path.

9. Electrical connection means according to any one of Claims 2 - 6, **characterized in that** the contact parts of the first connection component (105) and the second connection component (106) are arranged adjacent (close) to each other; in particular, the contact parts of the first connection component (105) and the second connection component (106) have respective straight edges, which extend together in parallel on two opposite sides of the gap (109).

10. Electrical connection means according to any one of Claims 2 - 6, **characterized in that** the contact parts of the first connection component (105) and the second connection component (106) have shapes that are substantially mirror images of each other.

11. Electrical connection means according to any one of Claims 2 - 6, **characterized in that** the contact parts of the first connection component (105) and the second connection component (106) are configured to form a substantially circular or disk-like shape.

12. Electrical connection means according to any one of Claims 2 - 6, **characterized in that** the angle at which the contact parts of the first connection component (105) and the second connection component (106) extend in different directions relative to each other is 90° - 270°;
preferably, the angle at which the contact parts of the first connection component (105) and the second connection component (106) extend in different directions relative to each other is in the range of 170° - 190°;
more preferably, the angles at which the contact parts of the first connection component (105) and the second connection component (106) extend in different directions relative to each other differ by approximately 180°.

13. Electrical connection means according to any one of Claims 2 - 6, **characterized in that** the respective positions of the stems (108) of the first connection component (105) and the second connection component (106) are radially opposite each other.

14. Electrical connection means according to any one of Claims 2 - 6, **characterized by** comprising two said terminal connection parts (104); the terminal connection part (104) is provided by the corresponding first body part (102a) or second body part (102b), and used for connecting to a corresponding terminal of a battery unit adjacent to said battery unit.

15. Electrical connection means according to any one of Claims 2 - 6, **characterized by** comprising a circuit connection part (103) provided by the first body part (102a) or the second body part (102b), for connecting to an operating circuit of the battery pack.

## Patentansprüche

1. Elektrisches Verbindungsmittel (100) zum Verbinden von Klemmen von Batterieeinheiten in einem Batteriepack, umfassend:
mehrere Körper (102) aus einem elektrisch leitfähigen Material, wobei jeder der Körper mindestens ein erstes Körperteil (102a) und ein zweites Körperteil (102b) aufweist;
mindestens ein Klemmenverbindungsteil (104), das durch das erste Körperteil (102a) oder das zweite Körperteil (102b) bereitgestellt wird, zum Verbinden mit der Klemme der Batterieeinheit;
**dadurch gekennzeichnet, dass** das mindestens eine Klemmenverbindungsteil (104) mindestens eine Verbindungskomponente (105, 106) umfasst,
wobei jede Verbindungskomponente (105) ein Kontaktteil zum Kontaktieren der Klemme der Batterieeinheit umfasst, das mindestens eine Klemmenverbindungsteil (104) ferner mindestens einen Schaft (108) umfasst, der das Kontaktteil mit dem ersten Körperteil (102a) oder dem zweiten Körperteil (102b) verbindet, wobei der Schaft (108) einen kleineren Querschnitt als das Kontaktteil aufweist, die mehreren Körper (102) durch mindestens ein Verbindungsteil (110) miteinander verbunden sind, jedes Verbindungsteil (110) mindestens ein schmelzbares Teil (211) aufweist, das mindestens eine schmelzbare Teil (211) einen kleineren Querschnitt als der mindestens eine Schaft (108) aufweist und das mindestens eine schmelzbare Teil (211) als Sicherung zum Abschalten eines übermäßig hohen Stroms verwendet wird.

2. Elektrisches Verbindungsmittel nach Anspruch 1,
**dadurch gekennzeichnet, dass** das mindestens eine Klemmenverbindungsteil (104) eine erste Verbindungskomponente (105) und eine zweite Verbindungskomponente (106) umfasst, von denen zwei vorhanden sind und die voneinander entfernt sind und die jeweils über die jeweiligen Schäfte (108) mit dem Körper verbunden sind.

3. Elektrisches Verbindungsmittel nach Anspruch 1,
**dadurch gekennzeichnet, dass** das mindestens eine Verbindungsteil (110) mit einem lokal verengten Teil als mindestens einem schmelzbaren Teil (111) versehen ist.

4. Elektrisches Verbindungsmittel nach Anspruch 1,
**dadurch gekennzeichnet, dass** in dem mindestens einen Verbindungsteil (110) eine Öffnung zum Bilden des mindestens einen schmelzbaren Teils (111) bereitgestellt ist, wobei die Öffnung vorzugsweise ein Durchgangsloch ist.

5. Elektrisches Verbindungsmittel nach Anspruch 1,
**dadurch gekennzeichnet, dass** sich das Verbindungsteil (110) entlang eines im Wesentlichen Z-förmigen Pfads erstreckt und die mehreren Körper (102) in einer versetzten Anordnung verbindet.

6. Elektrisches Verbindungsmittel (100) zum Verbinden von Klemmen von Batterieeinheiten in einem Batteriepack, umfassend:
einen Körper aus einem elektrisch leitfähigen Material, wobei der Körper mindestens ein erstes Körperteil (102a) und ein zweites Körperteil (102b) aufweist;
mindestens ein Klemmenverbindungsteil (104), das durch das erste Körperteil (102a) oder das zweite Körperteil (102b) bereitgestellt wird, zum Verbinden mit der Klemme der Batterieeinheit;
**dadurch gekennzeichnet, dass** das mindestens eine Klemmenverbindungsteil (104) eine erste Verbindungskomponente (105) und eine zweite Verbindungskomponente (106) umfasst, von denen mindestens zwei vorhanden sind und die voneinander entfernt sind; und
jede der Verbindungskomponenten ein Kontaktteil zum Kontaktieren der Klemme der Batterieeinheit und einen Schaft (108) umfasst, der das Kontaktteil mit dem Körper verbindet, wobei der Schaft (108) einen kleineren Querschnitt als das Kontaktteil aufweist und der Schaft (108) als Sicherung zum Abschalten eines übermäßig hohen Stroms verwendet wird.

7. Elektrisches Verbindungsmittel nach Anspruch 6,
**dadurch gekennzeichnet, dass** sich die Kontaktteile der ersten Verbindungskomponente (105) und der zweiten Verbindungskomponente (106) relativ zueinander in der gleichen Richtung erstrecken oder sich in unterschiedlichen Richtungen erstrecken.

8. Elektrisches Verbindungsmittel nach einem der Ansprüche 2 bis 6,
**dadurch gekennzeichnet, dass** das Kontaktteil der ersten Verbindungskomponente (105) durch den Schaft (108) über einen Streifen (221) mit dem Körper verbunden ist;
vorzugsweise der Streifen (221) ein nach außen ragendes erstes Ende (221a) aufweist, das mit dem Körper verbunden ist, und der Streifen (221) ein zweites Ende (221b) als entferntes Ende aufweist, das mit dem Schaft (108) verbunden ist;
mehr bevorzugt der Streifen (221) sich entlang eines im Wesentlichen kreisförmigen oder annähernd halbkreisförmigen Pfads erstreckt.

9. Elektrisches Verbindungsmittel nach einem der Ansprüche 2 bis 6,
**dadurch gekennzeichnet, dass** die Kontaktteile der ersten Verbindungskomponente (105) und der zweiten Verbindungskomponente (106) benachbart (dicht) zueinander angeordnet sind; insbesondere die Kontaktteile der ersten Verbindungskomponente (105) und der zweiten Bindungskomponente (106) jeweils gerade Kanten aufweisen, die sich gemeinsam parallel auf zwei gegenüberliegenden Seiten des Spalts (109) erstrecken.

10. Elektrisches Verbindungsmittel nach einem der Ansprüche 2 bis 6,
**dadurch gekennzeichnet, dass** die Kontaktteile der ersten Verbindungskomponente (105) und der zweiten Verbindungskomponente (106) Formen aufweisen, die im Wesentlichen Spiegelbilder zueinander sind.

11. Elektrisches Verbindungsmittel nach einem der Ansprüche 2 bis 6,
**dadurch gekennzeichnet, dass** die Kontaktteile der ersten Verbindungskomponente (105) und der zweiten Verbindungskomponente (106) konfiguriert sind, um eine im Wesentlichen kreisförmige oder scheibenartige Form zu bilden.

12. Elektrisches Verbindungsmittel nach einem der Ansprüche 2 bis 6,
**dadurch gekennzeichnet, dass** der Winkel, in dem sich die Kontaktteile der ersten Verbindungskomponente (105) und der zweiten Verbindungskomponente (106) in unterschiedlichen Richtungen relativ zueinander erstrecken, 90° bis 270° beträgt;
vorzugsweise der Winkel, in dem sich die Kontaktteile der ersten Verbindungskomponente (105) und der zweiten Verbindungskomponente (106) in unterschiedlichen Richtungen relativ zueinander erstrecken, in dem Bereich von 170° bis 190° liegt;
mehr bevorzugt sich die Winkel, in denen sich die Kontaktteile der ersten Verbindungskomponente (105) und der zweiten Verbindungskomponente (106) in unterschiedlichen Richtungen relativ zueinander erstrecken, um ungefähr 180° unterscheiden.

13. Elektrisches Verbindungsmittel nach einem der Ansprüche 2 bis 6,
**dadurch gekennzeichnet, dass** die jeweiligen Positionen der Schäfte (108) der ersten Verbindungskomponente (105) und der zweiten Verbindungskomponente (106) einander radial gegenüberliegen.

14. Elektrisches Verbindungsmittel nach einem der Ansprüche 2 bis 6,
**dadurch gekennzeichnet, dass** es zwei der Klemmenverbindungsteile (104) umfasst; das Klemmenverbindungsteil (104) durch das entsprechende erste Körperteil (102a) oder zweite Körperteil (102b) bereitgestellt wird und zum Verbinden mit einer entsprechenden Klemme einer Batterieeinheit neben der Batterieeinheit verwendet wird.

15. Elektrisches Verbindungsmittel nach einem der Ansprüche 2 bis 6,
**dadurch gekennzeichnet, dass** es ein Schaltungsverbindungsteil (103) umfasst, das durch den ersten Körperteil (102a) oder den zweiten Körperteil (102b) zum Verbinden mit einer Betriebsschaltung des Batteriepacks bereitgestellt wird.

## Revendications

1. Moyen de connexion électrique (100) permettant de connecter des bornes d'unités de batterie dans un bloc-batterie, comprenant :
plusieurs corps (102) constitués d'un matériau conducteur d'électricité, chacun des corps ayant au moins une première partie de corps (102a) et une seconde partie de corps (102b) ;
au moins une partie de connexion à la borne (104) fournie par la première partie de corps (102a) ou la seconde partie de corps (102b), pour se connecter à la borne de l'unité de batterie ;
**caractérisé en ce que** l'au moins une partie de connexion à la borne (104) comprend au moins un composant de connexion (105, 106),
chaque dit composant de connexion (105) comprend une partie de contact pour entrer en contact avec la borne de l'unité de batterie, l'au moins une partie de connexion à la borne (104) comprend en outre au moins une tige (108) connectant la partie de contact à la première partie de corps (102a) ou à la seconde partie de corps (102b), dans lequel la tige (108) comporte une section transversale plus petite que la partie de contact, les corps multiples (102) sont connectés entre eux par au moins une partie de connexion (110), chaque dite partie de connexion (110) comporte au moins une partie fusible (211), l'au moins une partie fusible (211) comporte une section transversale plus petite que l'au moins une tige (108), et l'au moins une partie fusible (211) est utilisée comme fusible pour couper un courant trop élevé.

2. Moyen de connexion électrique selon la revendication 1, **caractérisé en ce que** l'au moins une partie de connexion à la borne (104) comprend un premier composant de connexion (105) et un second composant de connexion (106) qui sont au nombre de deux et espacés l'un de l'autre, et qui sont respectivement connectés au corps par l'intermédiaire desdites tiges respectives (108).

3. Moyen de connexion électrique selon la revendication 1, **caractérisé en ce que** l'au moins une partie de connexion (110) est pourvue d'une partie localement étroite comme l'au moins une partie fusible (111).

4. Moyen de connexion électrique selon la revendication 1, **caractérisé en ce qu'une** ouverture est prévue dans l'au moins une partie de connexion (110) pour former l'au moins une partie fusible (111), l'ouverture étant de préférence un trou traversant.

5. Moyen de connexion électrique selon la revendication 1, **caractérisé en ce que** la partie de connexion (110) s'étend le long d'une trajectoire sensiblement en forme de Z, et connecte les corps multiples (102) en quinconce.

6. Moyen de connexion électrique (100) permettant de connecter des bornes d'unités de batterie dans un bloc-batterie, comprenant :
un corps constitué d'un matériau conducteur d'électricité, le corps ayant au moins une première partie de corps (102a) et une seconde partie de corps (102b) ;
au moins une partie de connexion à la borne (104) fournie par la première partie de corps (102a) ou la seconde partie de corps (102b), pour se connecter à la borne de l'unité de batterie ;
**caractérisé en ce que** l'au moins une partie de connexion à la borne (104) comprend un premier composant de connexion (105) et un second composant de connexion (106) qui sont au moins deux en nombre et espacés l'un de l'autre ; et
chacun des composants de connexion comprend une partie de contact pour entrer en contact avec la borne de l'unité de batterie, et une tige (108) connectant la partie de contact au corps, la tige (108) ayant une section transversale plus petite que la partie de contact, et la tige (108) étant utilisée comme un fusible pour couper un courant trop élevé.

7. Moyen de connexion électrique selon la revendication 6, **caractérisé en ce que** les parties de contact du premier composant de connexion (105) et du second composant de connexion (106) s'étendent dans la même direction, ou dans des directions différentes l'une par rapport à l'autre.

8. Moyen de connexion électrique selon l'une quelconque des revendications 2 à 6, **caractérisé en ce que** la partie de contact du premier composant de connexion (105) est connectée au corps par la tige (108) par l'intermédiaire d'une bande (221) ;
de préférence, la bande (221) a une première extrémité (221 a) faisant saillie vers l'extérieur et connectée au corps, et la bande (221) a une seconde extrémité (221b) étant une extrémité éloignée, qui est connectée à la tige (108) ;
de préférence, la bande (221) s'étend le long d'une trajectoire sensiblement circulaire ou approximativement semi-circulaire.

9. Moyen de connexion électrique selon l'une quelconque des revendications 2 à 6, **caractérisé en ce que** les parties de contact du premier composant de connexion (105) et du second composant de connexion (106) sont agencées de manière adjacente (proche) l'une de l'autre ; en particulier, les parties de contact du premier composant de connexion (105) et du second composant de connexion (106) ont des bords droits respectifs, qui s'étendent ensemble parallèlement sur deux côtés opposés de l'espace (109).

10. Moyen de connexion électrique selon l'une quelconque des revendications 2 à 6, **caractérisé en ce que** les parties de contact du premier composant de connexion (105) et du second composant de connexion (106) ont des formes qui sont essentiellement des images miroir l'une de l'autre.

11. Moyen de connexion électrique selon l'une quelconque des revendications 2 à 6, **caractérisé en ce que** les parties de contact du premier composant de connexion (105) et du second composant de connexion (106) sont configurées pour former une forme sensiblement circulaire ou en forme de disque.

12. Moyen de connexion électrique selon l'une quelconque des revendications 2 à 6, **caractérisé en ce que** l'angle auquel les parties de contact du premier composant de connexion (105) et du second composant de connexion (106) s'étendent dans des directions différentes l'une par rapport à l'autre est de 90° à 270° ;
de préférence, l'angle auquel les parties de contact du premier composant de connexion (105) et du second composant de connexion (106) s'étendent dans des directions différentes l'une par rapport à l'autre est compris dans la plage allant de 170° à 190° ;
plus préférablement, les angles auxquels les parties de contact du premier composant de connexion (105) et du second composant de connexion (106) s'étendent dans des directions différentes l'une par rapport à l'autre diffèrent d'environ 180°.

13. Moyen de connexion électrique selon l'une quelconque des revendications 2 à 6, **caractérisé en ce que** les positions respectives des tiges (108) du premier composant de connexion (105) et du second composant de connexion (106) sont radialement opposées l'une à l'autre.

14. Moyen de connexion électrique selon l'une quelconque des revendications 2 à 6, **caractérisé en ce qu'il** comprend deux dites parties de connexion à la borne (104) ; la partie de connexion à la borne (104) est fournie par la première partie de corps (102a) ou la seconde partie de corps (102b) correspondante, et utilisée pour la connexion à une borne correspondante d'une unité de batterie adjacente à ladite unité de batterie.

15. Moyen de connexion électrique selon l'une quelconque des revendications 2 à 6, **caractérisé en ce qu'il** comprend une partie de connexion de circuit (103) fournie par la première partie de corps (102a) ou la seconde partie de corps (102b), pour la connexion à un circuit de fonctionnement du bloc-batterie.
